# EUROPÄISCHE PATENTSCHRIFT

(11) **EP 4 031 394 B1**
(45) Veröffentlichungstag und Bekanntmachung des Hinweises auf die Patenterteilung: **09.12.2026**
(21) Anmeldenummer: 20760850.6
(22) Anmeldetag: 21.08.2020
(51) Int. Cl.: B60K 15/03

(54) **KUNSTSTOFFBEHÄLTER FÜR KRAFTFAHRZEUGE MIT ZUMINDEST EINER VERSTEIFUNGSSTRUKKTUR**
PLASTIC TANK FOR MOTOR VEHICLES HAVING AT LEAST ONE REINFORCING STRUCTURE
RÉSERVOIR EN PLASTIQUE POUR VÉHICULES AUTOMOBILES COMPRENANT AU MOINS STRUCTURE DE RENFORCEMENT

(30) Priorität: 20.09.2019 DE 102019125403
(43) Veröffentlichungstag der Anmeldung: 27.07.2022
(73) Patentinhaber: Kautex Textron GmbH & Co. KG, 53229 Bonn (DE)
(72) Erfinder: ROSENSTRÄTER, Sebastian, 51105 Köln (DE); QUANT, Frank, 53117 Bonn (DE)
(74) Vertreter: Richly & Ritschel Patentanwälte PartG mbB
(86) Internationale Anmeldenummer: PCT/EP2020/073519
(87) Internationale Veröffentlichungsnummer: WO 2021/052714

(56) Entgegenhaltungen:
- DE-A1- 102011 115 384
- DE-A1- 102016 209 544
- US-A1- 2010 237 080

## Beschreibung

Die vorliegende Erfindung betrifft einen Kunststoffbehälter für Kraftfahrzeuge mit einer Versteifungsstruktur.

Im Folgenden wird auf als Kraftstoffbehälter ausgebildete Kunststoffbehälter Bezug genommen. Kunststoffbehälter im Sinne der Erfindung sind insbesondere aber nicht ausschließlich Kraftstoffbehälter (für Ottokraftstoff oder Dieselkraftstoff), Harnstoffbehälter, Wischwasserbehälter, Ölbehälter, Nebenflüssigkeitsbehälter oder Additivbehälter für Kraftfahrzeuge und Batteriegehäuse für Traktionsbatterien, jeweils für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen. Weiterhin ist es auch möglich, entsprechende Betriebsflüssigkeitsbehälter durch Rotationssintern zu fertigen. Geeignete Materialien sind unter anderem Polyamid (PA) und/oder Polyoxymethylene (POM).

Bei Kraftfahrzeugen mit einer Brennkraftmaschine wird bei einer Wärmebeaufschlagung eines Kunststoffbehälters, insbesondere des Kraftstoffbehälters, die Betriebsflüssigkeit, z.B. der Kraftstoff ebenfalls erwärmt, so dass der Dampfdruck der Betriebsflüssigkeit steigt und der Kunststoffbehälter mit einem entsprechenden Innendruck beaufschlagt wird, wodurch der Kunststoffbehälter einer Deformation unterliegt.

Zum Entlüften eines Kunststoffbehälters in Form eines Kraftstoffbehälters ist dieser mit einem Kraftstoffdampffilter zum Ausfiltern von Treibstoffdämpfen fluidverbunden. Das Kraftstoffdampffilter kann beispielsweise als Aktivkohlefilter ausgebildet sein. Das Aktivkohlefilter wird im Betrieb der Brennkraftmaschine mittels Ansaugluft gespült, so dass in der Aktivkohle gebundene Treibstoffdämpfe der Brennkraftmaschine zugeführt werden können.

Bei Hybrid-Kraftfahrzeugen besteht ferner ein durch die verminderte Betriebszeit der Brennkraftmaschine bedingtes weiteres Problem. Aufgrund der verminderten Betriebszeit der Brennkraftmaschine wird ein mit dem Kraftstoffbehälter fluidverbundenes Aktivkohlefilter entsprechend weniger gespült, so dass auch weniger in der Aktivkohle gebundener Treibstoffdampf herausgespült werden kann. Dies kann zur Folge haben, dass Aktivkohlefilter bei Hybrid-Kraftfahrzeugen größer dimensioniert werden müssen. Ferner wird durch Entlüften des Kraftstoffbehälters über das Aktivkohlefilter aufgrund des Druckabfalls innerhalb des Kraftstoffbehälters weiterer Kraftstoff in die Dampfphase überführt, so dass es vorteilhaft wäre, den Kraftstoffbehälter steifer und/oder druckfester auszuführen. Denn dann kann der Kraftstoffbehälter von dem Aktivkohlefilter mittels eines steuerbaren Ventil fluidgetrennt werden, wodurch das Aktivkohlefilter mit weniger Kraftstoffdämpfen beladen wird.

Es ist daher angestrebt, die Druckbeständigkeit von Kunststoffbehältern, insbesondere von Kraftstoffbehältern und dort insbesondere von Kraftstoffbehältern für Hybrid-Kraftfahrzeuge zu erhöhen. Kraftstoffbehälter für Hybrid-Kraftfahrzeuge sollen vorzugsweise einen Überdruck von bis zu 400 mBar (Millibar) oder mehr und einen Unterdruck von etwa 150 mBar oder mehr standhalten können.

Aus dem Stand der Technik ist es bekannt, einen Kunststoffbehälter mittels eines zwischen zwei einander gegenüberliegenden Behälterwänden angeordneten Versteifungselements zu verstärken, wobei das Versteifungselement mit den Behälterwänden verbunden ist. Ein entsprechender Kunststoffbehälter ist aus der DE 10 2013 012 687 A1 bekannt. Dieser Kunststoffbehälter weist eine erhöhte strukturelle Stabilität sowohl bei Überdruck als auch bei Unterdruck auf. Nachteilig bei dieser Art der Versteifung ist jedoch, dass der Behälterinnenraum nicht mehr gänzlich frei nutzbar ist.

Um die sich aus der DE 10 2013 012 687 A1 ergebenden Nachteile zu lösen ist es aus dem Stand der Technik bekannt, eine flächige Verstärkungsstruktur mit der Behälterwand zu verbinden, um so die Stabilität und/oder die Druckfestigkeit des Behälters zu erhöhen. Nachteilig bei einer entsprechenden Verstärkung des Behälters ist, dass bei einer hochdynamischen Belastung des Behälters, die beispielsweise bei einem Unfall des Kraftfahrzeugs, in dem der Behälter verbaut ist, an dem Rand der Verstärkungsstruktur Rissbildung und Rissfortpflanzung im Kunststoffbehälter auftritt. DE 10 2016 209544 A1 offenbart noch eine Variante eines Kraftstoffbehälters mit einer Versteifungsstruktur.

Der vorliegenden Erfindung liegt die Aufgabe zugrunde, einen Kunststoffbehälter bereitzustellen, der hochdynamischen Belastungen verbessert standhält und der ferner erhöhten Über- und Unterdrücken standhalten kann und der bei Druckbeaufschlagung eine verminderte Deformation aufweist, wobei gleichzeitig gewährleistet bleiben soll, dass ein Behälterinnenraum ohne oder mit verminderten Einschränkungen nutzbar bleibt.

Die der vorliegenden Erfindung zugrundeliegende Aufgabe wird durch einen Betriebsflüssigkeitsbehälter mit den Merkmalen des Anspruchs 1 gelöst. Vorteilhafte Ausgestaltungen des Betriebsflüssigkeitsbehälters sind in den von Anspruch 1 abhängigen Ansprüchen beschrieben.

Im Genaueren wird die der vorliegenden Erfindung zugrundeliegende Aufgabe gelöst durch einen Kunststoffbehälter für ein Kraftfahrzeug mit einer einen Behälterinnenraum begrenzenden Behälterwand und mit zumindest einer Versteifungsstruktur, die mit der Behälterwand flächig verbunden ist, wobei der Kunststoffbehälter dadurch gekennzeichnet ist, dass eine Umrandung der Versteifungsstruktur zwischen zumindest zwei auf der Umrandung befindlichen Punkten jeweils zumindest zwei zueinander identische Kantenverläufe aufweist, und dass die Umrandung entlang ihrer Längserstreckung im Bereich der jeweiligen Kantenverläufe zumindest abschnittsweise einen Abstand zu einer die zumindest zwei Punkte verbindenden direkten Verbindungslinie aufweist.

Der entsprechend ausgebildete Kunststoffbehälter weist den Vorteil auf, dass bei einer hochdynamischen Belastung (beispielsweise bei einem Unfall des Kraftfahrzeugs, in dem der Kunststoffbehälter eingebaut ist) der Kunststoffbehälter im Randbereich der Verstärkungsstruktur eine geringere Rissbildung und Rissfortpflanzung aufweist. Der entsprechend ausgebildete Kunststoffbehälter weist daher eine verbesserte Stabilität auf. Ferner kann der erfindungsgemäße Kunststoffbehälter verbessert Über- und Unterdrücken innerhalb des Behälterinnenraumes bezüglich der Atmosphäre standhalten, wobei gewährleistet bleibt, dass der Behälterinnenraum weiterhin frei nutzbar ist.

Die Behälterwand besteht aus Kunststoff. Vorzugsweise ist die Behälterwand mehrschichtig aufgebaut. Weiter vorzugsweise weist die Behälterwand Polyethylen hoher Dichte (HDPE) auf. Weiter vorzugsweise weist die Behälterwand eine Innenschicht, die vorzugsweise aus Polyethylen hoher Dichte (HDPE) gebildet ist, eine Haftvermittlerschicht, die vorzugsweise aus Polyethylen niedriger Dichte (LDPE) gebildet ist, und eine Außenschicht, die vorzugsweise aus Polyethylen hoher Dichte (HDPE) gebildet ist, auf. Weiter vorzugsweise weist die Behälterwand Polyamid und/oder POM auf.

Für den Fall, dass der Kunststoffbehälter als Kraftstoffbehälter, insbesondere als Kraftstoffbehälter für Ottokraftstoffe ausgebildet ist, weist der erfindungsgemäße Kunststoffbehälter hervorragende Barriereeigenschaften für Kohlenwasserstoffe auf, da die Versteifungsstruktur bzw. die Versteifungsstrukturen eine Barriereschicht (beispielsweise eine EVOH-Schicht) der Behälterwand nicht beschädigen und deren Funktionalität nicht einschränken.

Der Kunststoffbehälter ist vorzugsweise aus einem thermoplastischen Kunststoff gebildet. In dem Fall, dass der Kunststoffbehälter als Kraftstoffbehälter ausgebildet ist, kann die Behälterwand / können die Behälterwände aus einem Materialschichtsystem umfassend einer Innenschicht in Form einer HDPE-Schicht, einer Haftvermittlerschicht in Form einer LDPE-Schicht, einer Barriereschicht in Form einer EVOH-Schicht, einer weiteren Haftvermittlerschicht in Form einer LDPE-Schicht und einer Außenschicht in Form einer weiteren HDPE-Schicht oder einer Recyklatschicht gebildet sein.

Die Verbindung der ersten Versteifungsstruktur bzw. der Versteifungsstrukturen mit der Behälterwand erfolgt vorzugsweise vollflächig. Diese Verbindung erfolgt vorzugsweise stoffschlüssig, beispielsweise mittels einer Verschweißung. Ferner ist es möglich, dass die Versteifungsstruktur mit der Behälterwand verklebt wird.

Ferner ist es auch möglich, dass die Verbindung der Versteifungsstruktur bzw. der Versteifungsstrukturen mit der Behälterwand vorzugsweise teilflächig erfolgt.

Vorzugsweise ist die Versteifungsstruktur faserverstärkt.

Die Faserverstärkung der Versteifungsstruktur bzw. der Versteifungsstrukturen erfolgt mittels Verstärkungsfasern, die auch als Fasermaterial bezeichnet werden können. Das Fasermaterial weist vorzugsweise Glasfasern und/oder Kohlenstofffasern und/oder Polymerfasern und/oder Aramidfasern und/oder Naturfasern (beispielsweise Flachsfasern) und/oder ein anderes geeignetes Fasermaterial auf.

Die Versteifungsstruktur bzw. die Versteifungsstrukturen weisen vorzugsweise eine thermoplastische oder eine duroplastische Matrix bzw. Matrixmaterial auf, in die das Fasermaterial eingebettet ist.

Die faserverstärkten Versteifungsstrukturen können Zugkräfte aufnehmen und können somit als zugfeste Versteifungsstrukturen bzw. Verstärkungsvorrichtungen bezeichnet werden. Vorzugsweise können die Versteifungsstrukturen auch Druckkräfte aufnehmen und können somit als zug- und/oder druckfeste Versteifungsstrukturen bzw. Verstärkungsvorrichtungen bezeichnet werden.

Die Versteifungsstruktur weist eine größere Längenund Breitenerstreckung als Dickenerstreckung auf. Die Versteifungsstruktur liegt mit der durch deren Längenerstreckung und Breitenerstreckung aufgespannten Fläche auf der Behälterwand auf.

Vorzugsweise gehen die zwei identischen Kantenverläufe direkt ineinander über, d.h., dass sich ein zweiter Kantenverlauf direkt einem ersten Kantenverlauf anschließt.

Ein Kantenverlauf kann auch als Wiederhohleinheit und/oder als Umrandungsverlauf bezeichnet werden.

Der Abstand der Umrandung zu der direkten Verbindungslinie ist von Null unterschiedlich. Bei der die zwei Punkte miteinander verbindenden Verbindungslinie handelt es sich um eine gedachte und somit imaginäre Verbindungslinie. Die Kantenverläufe weisen in Draufsicht auf die Verstärkungsstruktur zu der Verbindungslinie zumindest abschnittsweise einen Abstand auf, der von Null verschieden ist.

Die Versteifungsstruktur ist weiter vorzugsweise derart ausgebildet, dass die gesamte Umrandung der Versteifungsstruktur eine Vielzahl von sich aneinanderreihender Kantenverläufe aufweist. Beispielsweise weist die gesamte Umrandung der Versteifungsstruktur einen undulierenden Verlauf auf. Weiter vorzugsweise weist die gesamte Umrandung der Versteifungsstruktur keine gerade verlaufenden Randbereiche auf.

Das Merkmal, gemäß dem die Umrandung der Versteifungsstruktur zwischen zumindest zwei auf der Umrandung befindlichen Punkten jeweils zumindest zwei zueinander identische Kantenverläufe aufweist, kann auch so ausgedrückt werden, dass die Umrandung zwischen zwei ersten Punkten zumindest zwei identische Kantenverläufe aufweist, und zwischen zwei zweiten Punkten zumindest zwei weitere identische Kantenverläufe aufweist, und so weiter, das heißt, dass zwischen zwei n-ten Punkten zumindest zwei weitere identische Kantenverläufe aufweist, wobei n eine natürliche Zahl größer als zwei ist.

Vorzugsweise ist der Kraftstoffbehälter derart ausgebildet, dass die jeweiligen Kantenverläufe eine parallel der Verbindungslinie verlaufende Erstreckung aufweisen, die größer als eine Wanddicke der Versteifungsstruktur ist.

Die parallel zur Verbindungslinie verlaufende Erstreckung des Kantenverlaufs ist die Projektion der Längserstreckung des Kantenverlaufs auf die Verbindungslinie.

Durch eine entsprechende Ausgestaltung des Kunststoffbehälters wird die Rissbildung und Rissfortpflanzung der Behälterwand im Fall einer hochdynamischen Belastung weiter reduziert.

Vorzugsweise ist der Kraftstoffbehälter derart ausgebildet, dass die jeweiligen Kantenverläufe eine parallel der Verbindungslinie verlaufende Erstreckung aufweisen, die kleiner als eine halbe Kantenlänge der Versteifungsstruktur.

Durch eine entsprechende Ausbildung des Kunststoffbehälters wird bei einer hochdynamischen Belastung des Kunststoffbehälters, wie diese beispielsweise bei einem Unfall des Kraftfahrzeugs auftritt, einer Rissausbreitung in der Behälterwand besonders wirkungsvoll entgegengewirkt.

Vorzugsweise ist der Kraftstoffbehälter derart ausgebildet, dass die Kantenverläufe zyklisch zwischen den zwei Punkten verlaufen. Durch eine entsprechende Ausgestaltung des Kunststoffbehälters wird die Rissbildung und Rissfortpflanzung der Behälterwand im Fall einer hochdynamischen Belastung nochmals weiter reduziert.

Da die Kantenverläufe zyklisch zwischen den zwei Punkten verlaufen, verlaufen die Kantenverläufe zwischen den zwei Punkten undulierend. Folglich weist die Umrandung der Versteifungsstruktur einen undulierenden Verlauf zwischen den zwei Punkten auf.

Vorzugsweise ist der Kraftstoffbehälter derart ausgebildet, dass die Umrandung Kantenverläufe aufweist, die stetig differentierbar sind.

Durch eine entsprechende Ausgestaltung des Kunststoffbehälters wird die Rissbildung und Rissfortpflanzung der Behälterwand im Fall einer hochdynamischen Belastung nochmals weiter reduziert. Denn aufgrund der stetigen Differentierbarkeit der Kantenverläufe weisen die Kantenverläufe kein Kanten auf, wodurch bei einer hochdynamischen Belastung des Kunststoffbehälters einer Rissausbreitung in der Behälterwand besonders wirkungsvoll entgegengewirkt.

Eine Funktion bzw. ein Kantenverlauf wird als steig differentierbar bezeichnet, wenn die Funktion bzw. der Kantenverlauf differentierbar ist und die so gewonnene Ableitung stetig ist.

Vorzugsweise ist der Kraftstoffbehälter derart ausgebildet, dass die Umrandung Kantenverläufe aufweist, die unstetig differentierbar sind.

Aufgrund der entsprechenden Formgebung der Versteifungsstruktur kann sich diese verbessert unterschiedlich vorgegebenen Geometrien des Kunststoffbehälters anpassen.

Weiter vorzugsweise weisen die Kantenverläufe in dem Bereich, in dem deren mathematische Ableitung unstetig ist, eine Abrundung auf.

Vorzugsweise ist der Kraftstoffbehälter derart ausgebildet, dass die Umrandung sinusförmige Kantenverläufe aufweist.

Dabei durchläuft die Umrandung zwischen den zwei Punkten vorzugsweise zumindest 720°, d.h. zwei volle Sinusperioden.

Vorzugsweise ist der Kraftstoffbehälter derart ausgebildet, dass die Umrandung halbkreisförmige Kantenverläufe aufweist, wobei sich ein konvexer Kantenverlauf einem konkaven Kantenverlauf anschließt.

Dabei durchläuft die Umrandung zwischen den zwei Punkten vorzugsweise zumindest 720°, so dass die Umrandung zwischen den zwei Punkten zumindest zwei konvex geformte und zwei konkav geformte Halbkreise aufweist.

Vorzugsweise ist der Kraftstoffbehälter derart ausgebildet, dass die Umrandung Kantenverläufe aufweist, die jeweils einem Spline/Polynomzug entsprechen.

Vorzugsweise ist der Kraftstoffbehälter derart ausgebildet, dass die Umrandung trapezförmige Kantenverläufe aufweist.

Vorzugsweise sind die Ecken der jeweiligen Trapeze abgerundet.

Vorzugsweise ist der Kraftstoffbehälter derart ausgebildet, dass die Umrandung sägezahnförmige Kantenverläufe aufweist.

Vorzugsweise schließen die Flanken der jeweiligen Kantenverläufe einen Winkel von weniger als 90° ein.

Vorzugsweise sind die Ecken der jeweiligen Sägezähne abgerundet.

Vorzugsweise ist der Kraftstoffbehälter derart ausgebildet, dass die Umrandung rechteckförmige Kantenverläufe aufweist.

Vorzugsweise sind die Ecken der jeweiligen Rechtecke abgerundet.

Vorzugsweise ist der Kraftstoffbehälter derart ausgebildet, dass die Versteifungsstruktur mit einer dem Behälterinnenraum zugewandten Innenfläche der Behälterwand und/oder mit einer dem Behälterinnenraum abgewandten Außenfläche der Behälterwand verbunden ist.

Vorzugsweise ist der Kraftstoffbehälter derart ausgebildet, dass eine erste Versteifungsstruktur mit einer dem Behälterinnenraum zugewandten Innenfläche der Behälterwand und eine zweite Versteifungsstruktur mit einer dem Behälterinnenraum abgewandten Außenfläche der Behälterwand verbunden ist.

Vorzugsweise ist der Kraftstoffbehälter derart ausgebildet, dass die Behälterwand derart zumindest abschnittsweise sandwichartig zwischen der ersten Versteifungsstruktur und der zweiten Versteifungsstruktur angeordnet ist, dass die erste Versteifungsstruktur und die zweite Versteifungsstruktur zumindest abschnittsweise überlappend angeordnet sind.

Der entsprechend ausgebildete Kunststoffbehälter weist mannigfaltige Vorteilen auf. Aufgrund der sandwichartigen Anordnung der Behälterwand zwischen den ersten und zweiten Versteifungsstrukturen weist die Behälterwand eine erhöhte Biegefestigkeit in beide Biegerichtungen auf, so dass der Kunststoffbehälter sowohl bei Überdruck als auch bei Unterdruck im Behälterinnenraum (im Vergleich zum Umgebungsdruck) eine verminderte Deformation aufweist. Somit kann der erfindungsgemäße Kunststoffbehälter sowohl größeren Überdrücken als auch größeren Unterdrücken standhalten.

Aufgrund der erhöhten Steifigkeit des entsprechend ausgebildeten Kunststoffbehälters weist dieser bei einer Überdruckbelastung und/oder bei einer Unterdruckbelastung erheblich verminderte Deformationen auf. Dadurch ist es ermöglicht, dass der Kunststoffbehälter in einem Kraftfahrzeug mit einem verminderten Abstand zu Karosserieteilen und/oder zu anderen Kraftfahrzeugteilen eingebaut werden kann. Dadurch kann der zum Einbau des Kunststoffbehälters zur Verfügung stehende Bauraum in einem Kraftfahrzeug verbessert genutzt werden, so dass bei einem vorgegebenen Bauraum in einem Kraftfahrzeug der erfindungsgemäße Kunststoffbehälter ein vergrößertes Fassungsvermögen aufweist.

Ein weiterer Vorteil des entsprechend ausgebildeten Kunststoffbehälters ist die Eigenschaft, dass bei der Abkühlung des Kunststoffbehälters nach dessen Herstellung (durch einen Blasformprozess oder durch einen Spritzgussprozess oder durch einen Rotationssinterprozess) dessen Behälterwand einen verminderten Verzug aufweist, da die Behälterwand nicht nur einseitig, das heißt an dessen Außenfläche oder dessen Innenfläche mit einer Versteifungsstruktur versehen ist, sondern sowohl an der Außenfläche als auch an der Innenfläche jeweils mit einer Versteifungsstruktur versehen ist.

Das Merkmal, gemäß dem die Behälterwand derart zumindest abschnittsweise sandwichartig zwischen der ersten Versteifungsstruktur und der zweiten Versteifungsstruktur angeordnet ist, dass die erste Versteifungsstruktur und die zweite Versteifungsstruktur zumindest abschnittsweise überlappend angeordnet sind, ist äquivalent mit dem Merkmal, dass eine Flächennormale der Behälterwand in einem Überlappungsbereich mit der ersten Versteifungsstruktur und/oder mit der zweiten Versteifungsstruktur die erste Versteifungsstruktur und die zweite Versteifungsstruktur durchsetzt. Dies bedeutet, dass in Draufsicht auf die Behälterwand, also in einer zur Flächennormale der Behälterwand parallelen Blickrichtung die erste Versteifungsstruktur und die zweite Versteifungsstruktur überlappen. D.h., die Flächennormale der Behälterwand in dem Bereich der Behälterwand, der mit der ersten Versteifungsstruktur und mit der zweiten Versteifungsstruktur verbunden ist, durchsetzt sowohl die erste Versteifungsstruktur als auch die zweite Versteifungsstruktur.

Bei einer innenüberdruckbedingten Deformation der Behälterwand nimmt die zweite Versteifungsstruktur Zugkräfte und die erste Versteifungsstruktur Druckkräfte auf. Bei einer innenunterdruckbedingten Deformation der Behälterwand nimmt die erste Versteifungsstruktur Zugkräfte und die zweite Versteifungsstruktur Druckkräfte auf.

Vorzugsweise ist der Kraftstoffbehälter derart ausgebildet, dass die erste Versteifungsstruktur und die zweite Versteifungsstruktur gleiche Umrandungsverläufe aufweisen, und dass die Behälterwand derartig sandwichartig zwischen der ersten Versteifungsstruktur und der zweiten Versteifungsstruktur angeordnet ist, dass in Draufsicht auf die Behälterwand die erste Versteifungsstruktur und die zweite Versteifungsstruktur zueinander fluchtend verlaufen.

Ein entsprechend ausgebildeter Kunststoffbehälter weist eine nochmals erhöhte Steifigkeit auf, so dass dieser erhöhten Überdrücken und Unterdrücken standhalten kann und bei Überdruckbeaufschlagung und Unterdruckbeaufschlagung geringere Deformationen aufweist. Diese Vorteile werden trotz eines geringen Gewichts des Kunststoffbehälters erreicht.

Wenn die Behälterwand innerhalb einer Ebene angeordnet ist, die durch eine x-Achse und eine zu dieser senkrechten y-Achse aufgespannt ist, dann ist das Merkmal, wonach in Draufsicht auf die Behälterwand die erste Versteifungsstruktur und die zweite Versteifungsstruktur zueinander fluchtend verlaufen, gleichbedeutend mit dem Merkmal, dass die erste Versteifungsstruktur in x-Richtung und in y-Richtung die gleiche Ausdehnung aufweist wie die zweite Versteifungsstruktur.

Folglich verlaufen die Begrenzungskanten der ersten Versteifungsstruktur und der zweiten Versteifungsstruktur fluchtend zueinander.

Weitere Vorteile, Einzelheiten und Merkmale der Erfindung ergeben sich nachfolgend aus den erläuterten Ausführungsbeispielen. Dabei zeigen im Einzelnen:
- Figur 1A:: eine schematische Querschnittsdarstellung eines erfindungsgemäßen Kunststoffbehälters;
- Figur 1B:: eine Draufsicht auf den in Figur 1A dargestellten Kunststoffbehälter;
- Figur 1C:: eine Detailansicht einer Versteifungsstruktur des in Figur 1B dargestellten Kunststoffbehälters;
- Figur 2A:: eine Detailansicht eines Teils einer Umrandung einer Versteifungsstruktur eines Kunststoffbehälters gemäß einer ersten Ausführungsform der vorliegenden Erfindung;
- Figur 2B:: eine Detailansicht eines Teils einer Umrandung einer Versteifungsstruktur eines Kunststoffbehälters gemäß einer zweiten Ausführungsform der vorliegenden Erfindung;
- Figur 2C:: eine Detailansicht eines Teils einer Umrandung einer Versteifungsstruktur eines Kunststoffbehälters gemäß einer dritten Ausführungsform der vorliegenden Erfindung;
- Figur 2D:: eine Detailansicht eines Teils einer Umrandung einer Versteifungsstruktur eines Kunststoffbehälters gemäß einer vierten Ausführungsform der vorliegenden Erfindung;
- Figur 2E:: eine Detailansicht eines Teils einer Umrandung einer Versteifungsstruktur eines Kunststoffbehälters gemäß einer fünften Ausführungsform der vorliegenden Erfindung;
- Figur 2F:: eine Detailansicht eines Teils einer Umrandung einer Versteifungsstruktur eines Kunststoffbehälters gemäß einer sechsten Ausführungsform der vorliegenden Erfindung;
- Figur 3A:: eine schematische Querschnittsdarstellung eines Kunststoffbehälters gemäß einer weiteren Ausführungsform der vorliegenden Erfindung; und
- Figur 3B:: eine Detailansicht des in Figur 3A umkreisen Bereichs.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

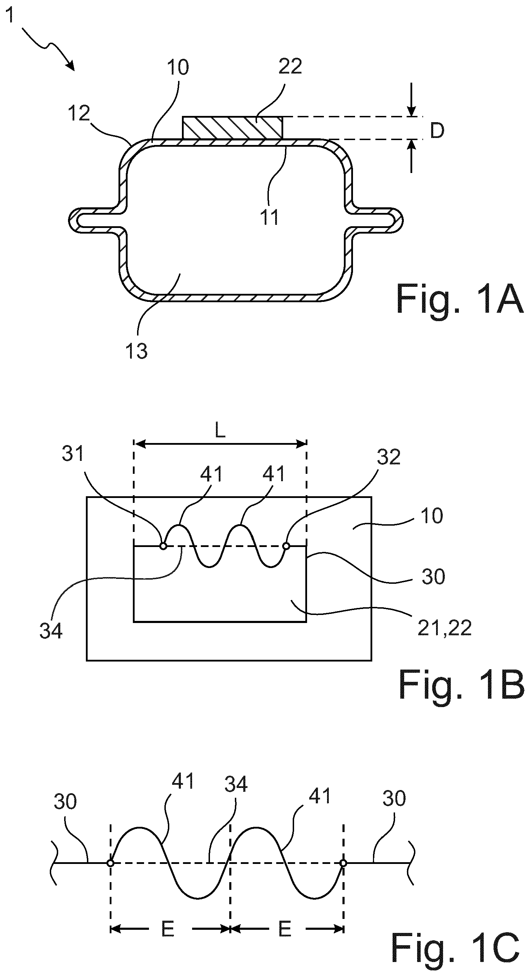

Figur 1A zeigt eine schematische Querschnittsdarstellung eines erfindungsgemäßen Kunststoffbehälters 1 für ein Kraftfahrzeug. Der Kunststoffbehälter 1 weist eine Behälterwand 10 auf, die einen Behälterinnenraum 13 begrenzt. Ferner weist der Kunststoffbehälter 1 eine Versteifungsstruktur 22 auf, die mit der Behälterwand 10 flächig verbunden ist. Im dargestellten Ausführungsbeispiel ist die Versteifungsstruktur 22 mit einer Außenfläche 12 der Behälterwand 10 flächig verbunden. Die flächige Verbindung kann ganz allgemein stoffschlüssig erfolgen, wobei sich hierzu insbesondere eine Verschweißung und/oder eine Verklebung anbieten. Die Verbindung kann vollflächig oder teilflächig erfolgen.

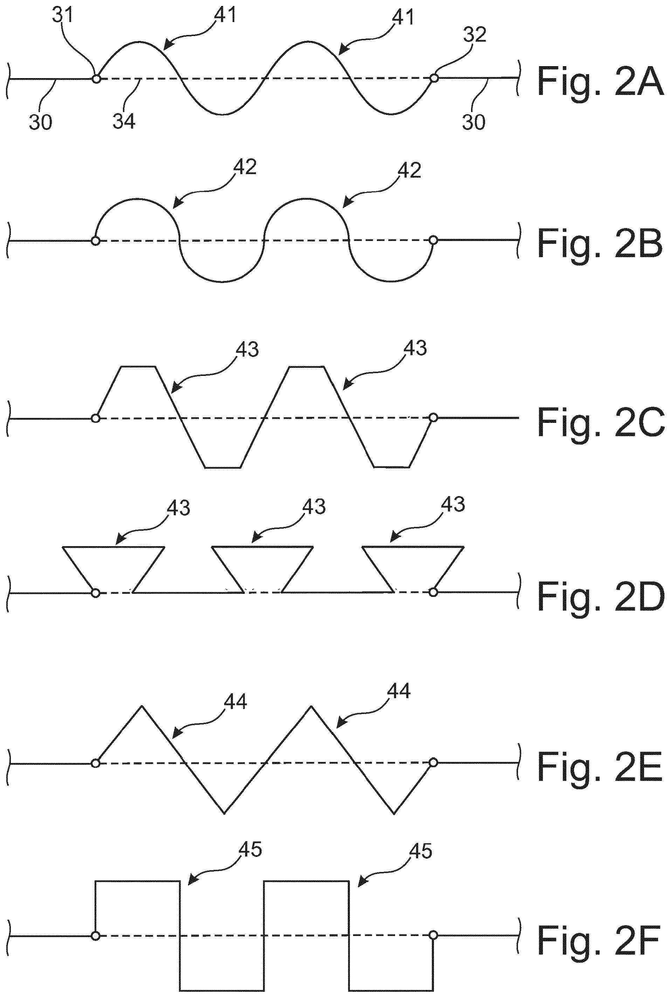

In Figur 1B ist der in Figur 1A dargestellte Kunststoffbehälter in Draufsicht auf die Außenfläche 12, an der die Versteifungsstruktur 22 befestigt ist, dargestellt. Es ist ersichtlich, dass die Versteifungsstruktur 22 von einer Umrandung 30 begrenzt ist. Die Umrandung 30 weist zwischen zwei auf der Umrandung 30 befindlichen Punkten 31, 32 zumindest zwei zueinander identische Kantenverläufe 41 auf. In dem dargestellten Ausführungsbeispiel verläuft jeder Kantenverlauf 41 in Form einer Sinuskurve. Jedoch ist die vorliegende Erfindung nicht auf eine entsprechende Formgebung der Kantenverläufe beschränkt, wie weiter unten mit Bezug auf die Figuren 2A bis 2F noch weiter erläutert wird. Aus Figur 1B ist ersichtlich, dass die Umrandung 30 entlang ihrer Längserstreckung im Bereich der jeweiligen Kantenverläufe 41 abschnittsweise jeweils einen Abstand zu einer den ersten Punkt 31 mit dem zweiten Punkt 32 verbindenden direkten Verbindungslinie 34 aufweist. Die Verbindungslinie 34 ist dabei als gedachte Verbindungslinie zwischen den Punkten 31, 32 zu verstehen. Wesentlich ist, dass die Umrandung 30 zwischen den Punkten 31, 32 nicht komplett geradlinig verläuft und zumindest abschnittsweise einen Abstand zu der Verbindungslinie 34 aufweist.

Figur 1C zeigt eine Detailansicht der in Figur 1B dargestellten Versteifungsstruktur 22 im Bereich der Umrandung 30, die die zumindest zwei zueinander identischen verlaufenden Kantenverläufe 41 aufweist. Jeder der Kantenverläufe 41 weist eine parallel zu der Verbindungslinie 34 verlaufende Erstreckung E auf. Die Dimensionierung der Kantenverläufe 41, und im Übrigen auch der Kantenverläufe 42, 43, 44 und 45, die später mit Bezug auf die Figuren 2A bis 2F noch erläutert werden, ist so, dass die Erstreckung E größer als eine Wanddicke D der Versteifungsstruktur 22 ist. Andererseits ist die Erstreckung E der jeweiligen Kantenverläufe 41, und im Übrigen auch der Kantenverläufe 42, 43, 44 und 45, kleiner als eine halbe Kantenlänge L (siehe Figur 1B) der Versteifungsstruktur 22.

Aus sämtlichen Figuren 1B, 1C und 2A bis 2F ist ersichtlich, dass die jeweiligen Kantenverläufe 41, 42, 43, 44 und 45 zyklisch zwischen den zwei Punkten 31, 32 verlaufen. Somit weist die Umrandung 30 im Bereich der jeweiligen Kantenverläufe einen undulierenden Verlauf auf.

In den Figuren 2A bis 2F sind unterschiedliche Ausführungen der Versteifungsstruktur dargestellt, wobei die jeweiligen Ausführungen unterschiedliche Formgebungen der Umrandung 30 aufweisen. In Figur 2A weist die Umrandung 30 zwischen dem ersten Punkt 31 und den zweiten Punkt 32 einen sinusförmigen Verlauf auf, sodass die jeweiligen Kantenverläufe 41 sinusförmige ausgebildet sind.

In Figur 2 B weist die Umrandung 30 zwischen dem ersten Punkt 31 und dem zweiten Punkt 32 halbkreisförmige Kantenverläufe 42 auf. Dabei ist ersichtlich, dass sich ein konvex ausgebildeter Kantenverlauf 42 einem konkav ausgebildeten Kantenverlauf 42 anschließt.

In den Figuren 2C und 2D weist die Umrandung 30 zwischen dem ersten Punkt 31 und den zweiten Punkt 32 trapezförmige Kantenverläufe 43 auf. Die jeweiligen Kantenverläufe 43 der in Figur 2C dargestellten Versteifungsstruktur sind dergestalt, dass der Kantenverlauf 43 im Bereich des ersten Punktes 31 und im Bereich des zweiten Punkts 32 mit der Umrandung 43 einen stumpfen Winkel von mehr als 90° einschließt. Bei den Kantenverläufen 43, die in Figur 2D dargestellt sind, sind die trapezförmige Kantenverläufe 43 dergestalt, dass die Kantenverläufe 43 im Bereich des ersten Punktes 31 und im Bereich des zweiten Punktes 32 mit der benachbarten Umrandung 30 einen Winkel von weniger als 90° einschließen.

In Figur 2E weist die Umrandung 30 zwischen dem ersten Punkt 31 und dem zweiten Punkt 32 sägezahnförmige Kantenverläufe 44 auf.

Die Winkel, die die jeweiligen Materialkanten der Versteifungsstruktur im Bereich der sägezahnförmigen Kantenverläufe 44 miteinander einschließen, können spitz (<90°) und/oder auch stumpf (>90°) sein.

In Figur 2 F weist die Umrandung 30 zwischen dem ersten Punkt 31 und dem zweiten Punkt 32 rechteckförmige Kantenverläufe 45 auf.

Bei den in den Figuren 2C bis 2F dargestellten unterschiedlichen Kantenverläufe 43, 44 und 45 können die Eckbereiche der Kantenverläufe 43 auch abgerundet sein, obschon dies in den Figuren so nicht dargestellt ist.

Sämtlichen Kantenverläufe 41, 42, 43, 44 und 45 ist gemein, dass diese über einen Spline angenähert sein können. Bei den in Figuren 2A und 2B dargestellten Kantenverläufe können diese über einen Polynomzug entsprechend angenähert sein.

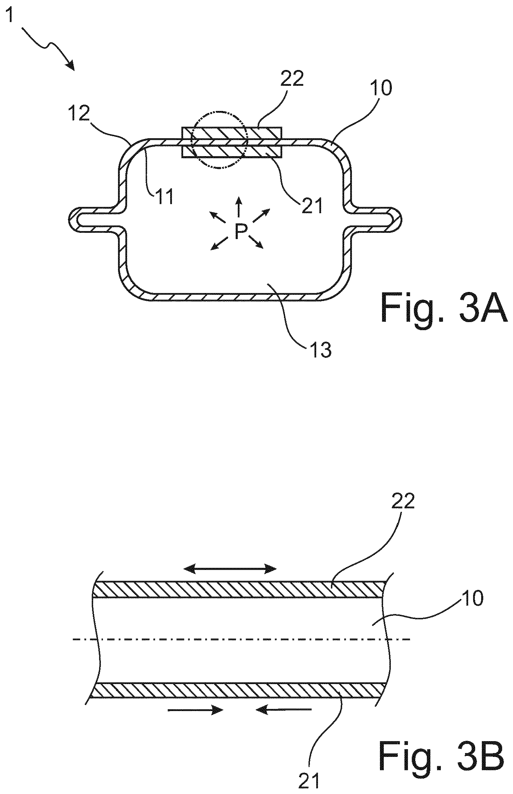

In Figur 3A ist ein Kunststoffbehälter 1 gemäß einer weiteren Ausführungsform der vorliegenden Erfindung im Querschnitt schematisch dargestellt. Es ist angedeutet, dass der Kunststoffbehälter 1 mit einem Innenüberdruck P beaufschlagt ist. Die in Figur 3A oben dargestellte Behälterwand 10 ist mit einer ersten Versteifungsstruktur 21 und einer zweiten Versteifungsstruktur 22 verbunden. Der Kontaktbereich der ersten Versteifungsstruktur 21 mit der Behälterwand 10 und der zweiten Versteifungsstruktur 22 mit der Behälterwand 10 ist in Figur 3B vergrößert dargestellt.

Aus Figur 3B ist ersichtlich, dass bei einer Innendruckbeaufschlagung, d.h. bei einem Überdruck innerhalb des Kunststoffbehälterinnenraums 13 im Vergleich zu dem Umgebungsdruck, die zweite Versteifungsstruktur 22 auf Zug belastet wird (siehe voneinander weg gerichtete Pfeilspitzen im Bereich der zweiten Versteifungsstruktur 22) und die erste Versteifungsstruktur 21 auf Druck belastet wird (siehe aufeinander zu gerichtete Pfeile im Bereich der ersten Versteifungsstruktur 21).

Wenn andererseits der Kunststoffbehälterinnenraum 13 einen geringeren Innendruck aufweist als der Umgebungsdruck des Kunststoffbehälters 1 würde die zweite Versteifungsstruktur 22 auf Druck belastet werden, wohingegen die erste Versteifungsstruktur 21 auf Zug belastet werden würde.

### Bezugszeichenliste

- 1: Kunststoffbehälter
- 10: Behälterwand (des Kunststoffbehälters)
- 11: Innenfläche (der Behälterwand)
- 12: Außenfläche (der Behälterwand)
- 13: Behälterinnenraum (des Kunststoffbehälters)
- 21: (erste) Versteifungsstruktur
- 22: (zweite) Versteifungsstruktur
- 30: Umrandung (der Versteifungsstruktur)
- 31: (erster) Punkt (auf der Umrandung)
- 32: (zweiter) Punkt (auf der Umrandung)
- 34: direkte Verbindungslinie (zwischen zwei Punkten)
- 41: (sinusförmiger) Kantenverlauf (der Umrandung zwischen zwei Punkten)
- 42: (halbkreisförmiger) Kantenverlauf (der Umrandung zwischen zwei Punkten)
- 43: (trapezförmiger) Kantenverlauf (der Umrandung zwischen zwei Punkten)
- 44: (sägezahnförmiger) Kantenverlauf (der Umrandung zwischen zwei Punkten)
- 45: (rechteckförmiger) Kantenverlauf (der Umrandung zwischen zwei Punkten)
- D: Wanddicke (der Versteifungsstruktur)
- E: Erstreckung (des Kantenverlaufs parallel zur Verbindungslinie)
- L: Kantenlänge (der Versteifungsstruktur)
- P: Innendruck (im Kunststoffbehälter)

## Patentansprüche

1. Kunststoffbehälter (1) für ein Kraftfahrzeug mit einer einen Behälterinnenraum (13) begrenzenden Behälterwand (10) und mit zumindest einer Versteifungsstruktur (21, 22) die mit der Behälterwand (10) flächig verbunden ist, wobei:
- eine die Versteifungsstruktur (21, 22) begrenzende Umrandung (30) der Versteifungsstruktur (21, 22) weist zwischen zumindest zwei auf der Umrandung (30) befindlichen Punkten (31, 32) jeweils zumindest zwei zueinander identische Kantenverläufe (41, 42, 43, 44, 45) auf;
- die Versteifungsstruktur (21, 22) weist eine größere Längen- und Breitenerstreckung als Dickenerstreckung auf und liegt mit der durch deren Längenerstreckung und Breitenerstreckung aufgespannten Fläche auf der Behälterwand (10) auf; wobei der Kunststoffbehälter (1) durch folgende Merkmale gekennzeichnet ist:
- die Umrandung (30) weist in Draufsicht auf die Versteifungsstruktur (21, 22) entlang ihrer Längserstreckung im Bereich der jeweiligen Kantenverläufe (41, 42, 43, 44, 45) zumindest abschnittsweise einen Abstand zu einer die zumindest zwei Punkte (31, 32) verbindenden direkten Verbindungslinie (34) auf.

2. Kunststoffbehälter (1) nach Anspruch 1, **dadurch gekennzeichnet, dass** die jeweiligen Kantenverläufe (41, 42, 43, 44, 45) eine parallel der Verbindungslinie (34) verlaufende Erstreckung (E) aufweisen, die größer als eine Wanddicke (D) der Versteifungsstruktur (21, 22) ist.

3. Kunststoffbehälter (1) nach einem der vorhergehenden Ansprüchen, **dadurch gekennzeichnet, dass** die jeweiligen Kantenverläufe (41, 42, 43, 44, 45) eine parallel der Verbindungslinie (34) verlaufende Erstreckung (E) aufweisen, die kleiner als eine halbe Kantenlänge (L) der Versteifungsstruktur (21, 22).

4. Kunststoffbehälter (1) nach einem der vorhergehenden Ansprüchen, **dadurch gekennzeichnet, dass** die Kantenverläufe (41, 42, 43, 44, 45) zyklisch zwischen den zwei Punkten (31, 32) verlaufen.

5. Kunststoffbehälter (1) nach einem der vorhergehenden Ansprüche, **dadurch gekennzeichnet, dass** die Umrandung (30) sinusförmige Kantenverläufe (41) aufweist.

6. Kunststoffbehälter (1) nach einem der vorhergehenden Ansprüche, **dadurch gekennzeichnet, dass** die Umrandung (30) halbkreisförmige Kantenverläufe (42) aufweist, wobei sich ein konvexer Kantenverlauf (42) einem konkaven Kantenverlauf (42) anschließt.

7. Kunststoffbehälter (1) nach einem der vorhergehenden Ansprüche, **dadurch gekennzeichnet, dass** die Umrandung (30) Kantenverläufe (41, 42, 43, 44, 45) aufweist, die jeweils einem Spline/Polynomzug entsprechen.

8. Kunststoffbehälter (1) nach einem der vorhergehenden Ansprüche, **dadurch gekennzeichnet, dass** die Umrandung (30) trapezförmige Kantenverläufe (43) aufweist.

9. Kunststoffbehälter (1) nach einem der vorhergehenden Ansprüche, **dadurch gekennzeichnet, dass** die Umrandung (30) sägezahnförmige Kantenverläufe (44) aufweist.

10. Kunststoffbehälter (1) nach einem der vorhergehenden Ansprüche, **dadurch gekennzeichnet, dass** die Umrandung (30) rechteckförmige Kantenverläufe (45) aufweist.

11. Kunststoffbehälter (1) nach einem der vorhergehenden Ansprüche, **dadurch gekennzeichnet, dass** die Versteifungsstruktur (21, 22) mit einer dem Behälterinnenraum (13) zugewandten Innenfläche (11) der Behälterwand (10) und/oder mit einer dem Behälterinnenraum (13) abgewandten Außenfläche (12) der Behälterwand (10) verbunden ist.

12. Kunststoffbehälter (1) nach einem der vorhergehenden Ansprüche, **dadurch gekennzeichnet, dass** eine erste Versteifungsstruktur (21) mit einer dem Behälterinnenraum (13) zugewandten Innenfläche (11) der Behälterwand (10) und eine zweite Versteifungsstruktur (22) mit einer dem Behälterinnenraum (13) abgewandten Außenfläche (12) der Behälterwand (10) verbunden ist.

13. Kunststoffbehälter (1) nach Anspruch 12, **dadurch gekennzeichnet, dass** die Behälterwand (10) derart zumindest abschnittsweise sandwichartig zwischen der ersten Versteifungsstruktur (21) und der zweiten Versteifungsstruktur (22) angeordnet ist, dass die erste Versteifungsstruktur (21) und die zweite Versteifungsstruktur (22) zumindest abschnittsweise überlappend angeordnet sind.

14. Kunststoffbehälter (1) nach Anspruch 13, **dadurch gekennzeichnet, dass** die erste Versteifungsstruktur (21) und die zweite Versteifungsstruktur (22) gleiche Umrandungsverläufe aufweisen, und dass die Behälterwand (10) derartig sandwichartig zwischen der ersten Versteifungsstruktur (21) und der zweiten Versteifungsstruktur (22) angeordnet ist, dass in Draufsicht auf die Behälterwand (10) die erste Versteifungsstruktur (21) und die zweite Versteifungsstruktur (22) zueinander fluchtend verlaufen.

## Claims

1. A plastic container (1) for a motor vehicle, having a container wall (10) delimiting a container interior (13), and having at least one stiffening structure (21, 22) which is connected in a planar manner to the container wall (10), wherein the plastic container (1) comprises the following features:
- a border (30) of the stiffening structure (21, 22) which delimits the stiffening structure (21, 22) has at least two mutually identical edge profiles (41, 42, 43, 44, 45) between at least two points (31, 32) located on the border (30); and
- the stiffening structure (21, 22) has a greater longitudinal and width extension than a thickness extension and the area spanned by the longitudinal and width extension of the stiffening structure (21, 22) rests on the container wall (10);
wherein the plastic container is **characterized in that**:
- the border (30), in a plan view of the stiffening structure (21, 22) is at a distance along its longitudinal extension in the region of each of the edge profiles (41, 42, 43, 44, 45), at least in sections, from a direct connecting line (34) connecting the at least two points (31, 32).

2. The plastic container (1) according to claim 1, **characterized in that** each of the edge profiles (41, 42, 43, 44, 45) has an extension (E) running parallel to the connecting line (34) that is greater than a wall thickness (D) of the stiffening structure (21, 22).

3. The plastic container (1) according to any of the preceding claims, **characterized in that** each of the edge profiles (41, 42, 43, 44, 45) has an extension (E) running parallel to the connecting line (34) which is less than half an edge length (L) of the stiffening structure (21, 22).

4. The plastic container (1) according to any of the preceding claims, **characterized in that** the edge profiles (41, 42, 43, 44, 45) run cyclically between the two points (31, 32).

5. The plastic container (1) according to any of the preceding claims, **characterized in that** the border (30) has sinusoidal edge profiles (41).

6. The plastic container (1) according to any of the preceding claims, **characterized in that** the border (30) has semicircular edge profiles (42), wherein a convex edge profile (42) adjoins a concave edge profile (42).

7. The plastic container (1) according to any of the preceding claims, **characterized in that** the border (30) has edge profiles (41, 42, 43, 44, 45) which each correspond to a spline/polynomial curve.

8. The plastic container (1) according to any of the preceding claims, **characterized in that** the border (30) has trapezoidal edge profiles (43).

9. The plastic container (1) according to any of the preceding claims, **characterized in that** the border (30) has sawtooth-shaped edge profiles (44).

10. The plastic container (1) according to any of the preceding claims, **characterized in that** the border (30) has rectangular edge profiles (45).

11. The plastic container (1) according to any of the preceding claims, **characterized in that** the stiffening structure (21, 22) is connected to an inner surface (11) of the container wall (10) facing the container interior (13) and/or to an outer surface (12) of the container wall (10) facing away from the container interior (13).

12. The plastic container (1) according to any of the preceding claims, **characterized in that** a first stiffening structure (21) is connected to an inner surface (11) of the container wall (10) facing the container interior (13), and a second stiffening structure (22) is connected to an outer surface (12) of the container wall (10) facing away from the container interior (13).

13. The plastic container (1) according to claim 12, **characterized in that** the container wall (10) is sandwiched at least in sections between the first stiffening structure (21) and the second stiffening structure (22) in such a manner that the first stiffening structure (21) and the second stiffening structure (22) are arranged overlapping at least in sections.

14. The plastic container (1) according to claim 13, **characterized in that** the first stiffening structure (21) and the second stiffening structure (22) have the same border profiles, and **in that** the container wall (10) is sandwiched between the first stiffening structure (21) and the second stiffening structure (22) in such a manner that, in a plan view of the container wall (10), the first stiffening structure (21) and the second stiffening structure (22) are aligned with each other.

## Revendications

1. Récipient en matière plastique (1) pour un véhicule automobile, comportant une paroi de récipient (10) délimitant un espace intérieur de récipient (13) et comportant au moins une structure de renfort (21, 22) qui est reliée sur la surface à la paroi de récipient (10), dans lequel :
- un bord (30) de la structure de renfort (21, 22) qui délimite la structure de renfort (21, 22) présente, entre au moins deux points (31, 32) se trouvant sur le bord (30), respectivement au moins deux tracés d'arêtes (41, 42, 43, 44, 45) identiques les uns aux autres ;
- la structure de renfort (21, 22) présente une extension en longueur et en largeur supérieure à l'extension en épaisseur et repose sur la paroi de récipient (10) avec la surface définie par son extension en longueur et son extension en largeur ; dans lequel le récipient en matière plastique (1) est **caractérisé par** les caractéristiques suivantes :
- le bord (30) présente, en vue de dessus sur la structure de renfort (21, 22), le long de son extension longitudinale dans la zone des tracés d'arêtes (41, 42, 43, 44, 45) respectifs, au moins dans certaines sections, un écart par rapport à une ligne de liaison (34) directe reliant les au moins deux points (31, 32).

2. Récipient en matière plastique (1) selon la revendication 1,
**caractérisé en ce que** les tracés d'arêtes (41, 42, 43, 44, 45) respectifs présentent une extension (E) s'étendant parallèlement à la ligne de liaison (34) et supérieure à une épaisseur de paroi (D) de la structure de renfort (21, 22).

3. Récipient en matière plastique (1) selon l'une des revendications précédentes, **caractérisé en ce que** les tracés d'arêtes (41, 42, 43, 44, 45) respectifs présentent une extension (E) s'étendant parallèlement à la ligne de liaison (34) et inférieure à la moitié d'une longueur d'arête (L) de la structure de renfort (21, 22).

4. Récipient en matière plastique (1) selon l'une des revendications précédentes, **caractérisé en ce que** les tracés d'arêtes (41, 42, 43, 44, 45) s'étendent de manière cyclique entre les deux points (31, 32).

5. Récipient en matière plastique (1) selon l'une des revendications précédentes, **caractérisé en ce que** le bord (30) présente des tracés d'arêtes (41) sinusoïdaux.

6. Récipient en matière plastique (1) selon l'une des revendications précédentes, **caractérisé en ce que** le bord (30) présente des tracés d'arêtes (42) semi-circulaires, dans lequel un tracé d'arête (42) convexe se raccorde à un tracé d'arête (42) concave.

7. Récipient en matière plastique (1) selon l'une des revendications précédentes, **caractérisé en ce que** le bord (30) présente des tracés d'arêtes (41, 42, 43, 44, 45) qui correspondent respectivement à un segment de spline/polynôme.

8. Récipient en matière plastique (1) selon l'une des revendications précédentes, **caractérisé en ce que** le bord (30) présente des tracés d'arêtes (43) trapézoïdaux.

9. Récipient en matière plastique (1) selon l'une des revendications précédentes, **caractérisé en ce que** le bord (30) présente des tracés d'arêtes (44) en dents de scie.

10. Récipient en matière plastique (1) selon l'une des revendications précédentes, **caractérisé en ce que** le bord (30) présente des tracés d'arêtes (45) rectangulaires.

11. Récipient en matière plastique (1) selon l'une des revendications précédentes, **caractérisé en ce que** la structure de renfort (21, 22) est reliée à une surface intérieure (11) de la paroi de récipient (10) tournée vers l'espace intérieur de récipient (13) et/ou à une surface extérieure (12) de la paroi de récipient (10) opposée à l'espace intérieur de récipient (13).

12. Récipient en matière plastique (1) selon l'une des revendications précédentes, **caractérisé en ce qu'**une première structure de renfort (21) est reliée à une surface intérieure (11) de la paroi de récipient (10) tournée vers l'espace intérieur de récipient (13) et une seconde structure de renfort (22) est reliée à une surface extérieure (12) de la paroi de récipient (10) opposée à l'espace intérieur de récipient (13).

13. Récipient en matière plastique (1) selon la revendication 12,
**caractérisé en ce que** la paroi de récipient (10) est disposée**,** au moins dans certaines sections, à la manière d'un sandwich entre la première structure de renfort (21) et la seconde structure de renfort (22), de telle sorte que la première structure de renfort (21) et la seconde structure de renfort (22) sont disposées en se chevauchant au moins dans certaines sections.

14. Récipient en matière plastique (1) selon la revendication 13,
**caractérisé en ce que** la première structure de renfort (21) et la seconde structure de renfort (22) présentent des tracés de bords identiques, et **en ce que** la paroi de récipient (10) est disposée à la manière d'un sandwich entre la première structure de renfort (21) et la seconde structure de renfort (22) de telle sorte que, en vue de dessus sur la paroi de récipient (10), la première structure de renfort (21) et la seconde structure de renfort (22) s'étendent en alignement l'une par rapport à l'autre.
